(19) Europäisches Patentamt / European Patent Office / Office européen des brevets

(11) **EP 4 589 394 A1**

(12) **EUROPÄISCHE PATENTANMELDUNG**

(43) Veröffentlichungstag:
**23.07.2025 Patentblatt 2025/30**

(21) Anmeldenummer: **24153250.6**

(22) Anmeldetag: **22.01.2024**

(51) Internationale Patentklassifikation (IPC):
**G05B 19/4065** [(2006.01)]

(52) Gemeinsame Patentklassifikation (CPC):
**G05B 19/4065**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder: **Siemens Aktiengesellschaft**
**80333 München (DE)**

(72) Erfinder: **Thamm, Aleksandra**
**90762 Fürth (DE)**

(74) Vertreter: **Siemens Patent Attorneys**
**Postfach 22 16 34**
**80506 München (DE)**

(54) **COMPUTERIMPLEMENTIERTES VERFAHREN ZUR VORHERSAGE DES VERSCHLEISSES EINES BEARBEITUNGS-WERKZEUGS, COMPUTERPROGRAMMPRODUKT UND VORRICHTUNG**

(57) Die Erfindung betrifft ein Verfahren zum Ermitteln des optimalen Zeitpunkts für den Austausch eines Werkzeugs, dafür muss der Verschleiß des Werkzeugs ermittelt werden.

Die Lösung basiert auf einer zeitabhängigen Modellierung des Verschleißes zwischen zwei Verschleiß-Messpunkten, die jeweils am Anfang und am Ende des Lebenszyklus eines Bearbeitungs-Werkzeuges gemessen werden. Diese Zeitpunkte der Messung sind entscheidend, da der Zerspanungsprozess nicht beeinträchtigt werden soll. Diese Messpunkte können mit einem beliebigen Messsystem aufgenommen werden. Anhand dieser Messwerte wird dann ein Neuronales Netz passend trainiert, das eine Vorhersage über einen jeweiligen Verschleißgrad treffen kann.

FIG 1

EP 4 589 394 A1

**Beschreibung**

In der industriellen Fertigung ist ein wichtiger Bestandteil die zentrale Steuerung, welche insbesondere aus Software besteht. Der Zweck dieser Software besteht darin, Werkzeuge zu steuern, um den Transport oder die Bearbeitung eines zu fertigenden Werkstücks zu veranlassen.

Eine klassische Aufgabe in der industriellen Fertigung ist die Bearbeitung, die hierfür verwendeten Werkzeuge unterliegen üblicherweise durch die Verwendung einem Verschleiß, die Zustandsüberwachung spielt in der Welt der Fertigung daher eine wichtige Rolle. Unter Bearbeitungswerkzeugen wird dabei alles verstanden, was zur Bearbeitung von Materialien verwendet werden kann, wie Fräsen, Bohrer, Sägen, uvam.

Generell ist es erwünscht, den Werkzeugwechsel so zu gestalten, dass die Verwendungszeiten optimiert und damit Kosten gesenkt werden.

Um den optimalen Zeitpunkt für den Austausch zu finden, muss der Verschleiß des Werkzeugs ermittelt werden, am besten quantitativ, was eine zeitraubende und mühsame Aufgabe ist. Zum einen sollen die Werkzeuge nicht zu früh (präventiv) ausgetauscht werden, da möglicherweise diese noch eine gewisse Zeit mit der erwünschten Qualität arbeiten könnten. Ein Austausch, der zu früh stattfindet, ist nicht nur unwirtschaftlich und mit höheren Kosten verbunden, sondern auch nicht förderlich bezogen auf die Nachhaltigkeit. Zum anderen dürfen die Werkzeuge nicht zu spät ausgetauscht werden, da viele der Werkstücke dann nicht eine ausreichende Qualität erreichen werden und auf Grund des Ausschusses, der produziert wird, ebenfalls die Produktivität und Nachhaltigkeit des Herstellers stark beeinträchtigt. Dazu kommt weiterhin die Werkzeugbruchgefahr. Diese ist mit einer möglichen Beschädigung der Spindel, Maschine und Werkstücks und daraus folgend längeren Standzeiten durch Reparaturen verbunden.

Darüber hinaus spielen bei der Ermittlung des Verschleißes von Bearbeitungswerkzeug in einem Fertigungsprozess viele Faktoren eine Rolle, wie zum Beispiel die verwendeten Materialen des Werkstücks und des Werkzeugs, die Schnittparameter, die ggf. notwendige Zufuhr von Kühlmittel, die bei der Bearbeitung erreichte Temperatur usw., welche die Komplexität einer Verschleißvorhersage für ein Bearbeitungswerkzeug enorm steigern.

Die Änderung der Schnittparameter während der Zerspanung kann zu einem nicht linearen Verschleiß führen, hier versagen bisherige Lösungen meist. Auch die Überwachung von Werkzeugen, die nicht neu sind und bereits Gebrauchsspuren aufweisen, schon gebraucht wurden, ist schwierig, da der bisherige Verschleißverlauf in der Regel unbekannt ist.

Stand der Technik

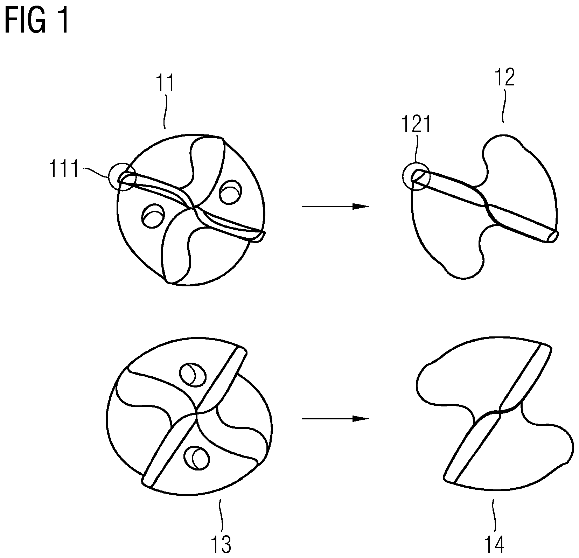

Es ist bereits bekannt, den vorhandenen Verschleiß am Bearbeitungswerkzeug anhand einer Mikroskopie-Aufnahme, insbesondere der Schnittflächen bzw. Bearbeitungsflächen zu ermitteln. Dies ist beispielsweise in der Figur 1 gezeigt. Dargestellt ist jeweils eine Aufsicht auf einen Bohr- (oder auch Fräs-)Kopf, 11 und 13, und daneben eine mikroskopische Auswertung der Bilder, 12 und 14 insbesondere der Schnittkanten. Im unteren Fall wird ein neues Bearbeitungs-Werkzeug dargestellt (also zum Zeitpunkt t0, hier ist noch kein Verschleiß zu erkennen (Verschleißgrad 0%). Der Verschleißgrad ist hierbei in Prozent angegeben, also beispielsweise der Anteil der betroffenen Fläche, bezogen auf die Gesamtfläche eines Bohrerkopfes. Das obere Bild 11 stellt das Bearbeitungs-Werkzeug zum Zeitpunkt $t_x$ dar, also nach einer vorher festgelegten Benutzungsdauer. Zu erkennen ist hier an der Schnittkante 111 eine Abnutzung, hier ein Verschleißgrad von 90%. Diese wird in der mikroskopischen Auswertung auch hervorgehoben, 121, und ausgewertet. Für diese Art von Untersuchung muss der Zerspannungsprozess unterbrochen werden, und im schlimmsten Fall das Werkzeug aus der Bearbeitungsmaschine entnommen werden, was dazu führt, dass die Standzeiten verlängert werden, wird dies in der Regel im laufenden Betrieb nicht gemacht.

Man kann zur Überwachung auch Aufnahmen aus der Qualitätssicherung der durch das Werkzeug bearbeitete Bauteile verwenden. Mögliche Kriterien sind dabei beispielsweise die Ausführung der Schnittkanten (präzise, klar oder ausgefranst) oder auch der ausgefrästen Flächen (glatt oder rau). Entsprechend schlechte Ergebnisse können allerdings verschiedene Ursachen haben und müssen nicht zwingend auf den Verschleiß des Bearbeitungswerkzeugs hinweisen.

Der Einsatz einer Kamera während der Zerspanung ist mit mangelnder Qualität der Fotos verbunden durch zum Beispiel des Einsatzes von Kühlmitteln, welche eine ungehinderte Aufnahme erschweren bis verhindern. Ein grundsätzlicher Vorteil dieser Methode liegt in der Quantifizierbarkeit, denn es lässt sich auf das Pixel genau den Verschleißgrad eines Werkzeugs bestimmen. Wenn dies allerdings manuell erfolgt, bedeutet es viel Aufwand und Arbeit.

Es ist weiterhin bekannt, den Verschleiß des Bearbeitungswerkzeugs anhand von Prozesssignalen zu bewerten, in der Regel wird dies über eine fest gesetzte Schwelle für das Signal realisiert. Beispiele für solche Signale sind das Drehmoment, der momentbildender Spindelstrom, die Standzeit, die Einsatzdauer oder auch der Schneideweg.

Sobald die gesetzte Schwelle überschritten ist, wird eine Aufforderung zum Austausch des Werkzeugs erzeugt und ausgegeben.

Bei Serienfertigungen kann auch eine Art Fingerabdruck (Fingerprint) des Werkzeugs während des Fertigens eines Werkstückes mit dem neuen Werkzeug aufgenommen werden, anhand dessen beispielsweise ein Schwellenwert ermittelt wird. Der Nachteil liegt darin, dass bei jedem neuartigen gefertigten Werkstück (beispielsweise mit einer neue Geometrie) auch ein neuer Fingerprint für den Bearbeitungsprozeß aufgenommen werden muss. Auch eine Änderung der Schnittparameter ist nicht ohne weiteres möglich. Darüber hinaus muss jedes Mal ein neuer Schwellwert ermittelt werden, da der Fertigungsprozess von vielen Faktoren abhängt, wie bereits oben beschrieben.

Eine andere Möglichkeit, einen Verschleiß des Werkzeuges zu ermitteln, ist die Verwendung von externen Sensoren, beispielsweise durch einen Kraft- und / oder einen Vibrationssensor. Auch bei dieser Lösung finden sich zahlreiche Nachteile: Es lässt sich nicht in jeder WerkzeugMaschine anhand der vorgegebenen Geometrie / Anordnung der Maschine ein Sensor und eine Auswerteeinheit installieren. Dadurch dass zusätzliche elektronischen Komponenten ausschließlich zu diesem Zweck zum Einsatz kommen, ist diese Lösung auch nicht nachhaltig. Es ist außerdem wichtig zu erwähnen, dass der Zusammenhang zwischen den Sensorgrößen und dem Verschleiß bekannt sein muss.

Eine Trendüberwachung, die mit bereits bekannten Prozesssignalen realisiert werden kann, ist ebenso in ihrer Anwendung begrenzt. Wenn die verwendeten Prozessparameter, wie zum Beispiel die Schnittgeschwindigkeit oder der Vorschub reduziert werden, reduziert sich auch die Amplitude des Stromes oder Drehmomentes. Geht man nun davon aus, dass der momentbildende Strom ansteigt, je höher der Verschleiß ist, würde sich bei Reduktion der Schnittparameter ein uneindeutiges Bild des Verschleißes ergeben. Auch bei teilweise verbrauchten Werkzeugen, wie oben beschrieben, bereitet die Trendüberwachung Schwierigkeiten, da der Zustand des Bohrers zunächst unbekannt ist.

Eine weitere Möglichkeit ist die Verwendung einer Standzeitberechnung zur Verschleißüberwachung. Diese Berechnung unterliegt jedoch üblicherweise einer Streuung. Sobald es Abweichungen in den Eigenschaften der genutzten Materialien (Werkstück und Werkstoff) oder in den Prozessparametern gibt, wird diese Berechnung ungenau.

Es ist daher die Aufgabe der Erfindung eine Lösung zur Vorhersage des Verschleißes eines Bearbeitungswerkzeuges anzugeben, welche vielseitig einsetzbar ist, keine Rüstzeiten benötigt, dabei möglichst genaue Vorhersagen trifft, die oben genannten Nachteile nicht aufweist und zudem eine möglichst nachhaltige Lösung anbietet.

Diese Aufgabe wird gelöst durch ein Verfahren, gemäß den Merkmalen des unabhängigen Patentanspruchs 1.

Weiterhin wird die Aufgabe gelöst durch ein Computerprogrammprodukt, gemäß den Merkmalen des Patenanspruchs 10.

Die Aufgabe wird außerdem gelöst durch eine Vorrichtung, gemäß den Merkmalen des unabhängigen Patentanspruchs 11.

Weitere Ausführungsformen der Erfindung werden durch die Unteransprüche abgedeckt.

In der im Folgenden vorgestellten Lösung werden keine Mikroskopie-Aufnahmen oder Messpunkte des Werkzeugs oder des Werkstücks während des Zerspanungsprozesses benötigt. Die vorgeschlagene Interpolationsmethode ermöglicht eine Ermittlung des Verschleißes zu jedem Zeitpunkt aus den Aufnahmen der Signale, die dann zum Training eines Neuronalen Netzes genutzt werden.

Das Ende der Lebensdauer eines Werkzeugs wird nicht präventiv ermittelt (berechnet), sondern prädiktiv, wobei der tatsächliche Zustand des Werkzeugs berücksichtigt wird. Daher bietet auch gegenüber der Berechnung der Standzeit die beschriebene Lösung Vorteile.

Die Erfindung wird im Folgenden auch durch die Figuren dargestellt. Dabei zeigt

Figur 1 Mikroskop-Aufnahmen eines Bearbeitungswerkzeugs neu und mit Abnutzung
Figur 2 einen vorverarbeiteten Stromverlauf
Figur 3 einen Stromverlauf mit Verschleißwert zu 2 Zeitpunkten,
Figur 4 ein Stromverlauf mit Stromintegralkennlinie,
Figur 5 Stromintegral-Kennlinie,
Figur 6 eine Augmentierung der Daten während des Trainings,
Figur 7 Training eines Neuronalen Netzes mit 4 Tupeln hintereinander,
Figur 8 Training des Neuronalen Netzes,
Figur 9 Inferenz mit einem trainiertem NN und
Figur 10 eine Übersicht des Verfahrens im Einsatz in einer industriellen Anlage.

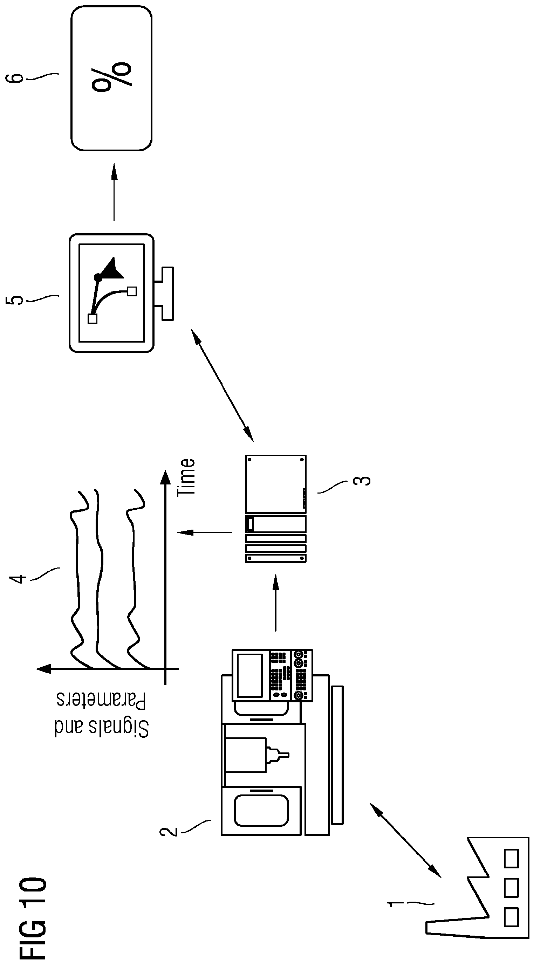

Figur 10 zeigt eine Übersicht, wie das im Folgenden beschriebene Verfahren zum Einsatz kommen kann.

Werkzeugmaschinen 2, wie ein Bohrer, eine Fräse oder ähnliches, werden in einer industriellen Anlage 1 aufgestellt und betrieben. Diese Geräte und Maschinen werden dabei gesteuert, und es werden Signale gemessen und Parameter bestimmt. Diese Signale und Parameter können dazu verwendet werden, ein Neuronales Netzwerk 5 zu trainieren. Das erfindungsgemäße Verfahren hilft nun dabei, mittels des NN den Verschleißgrad 6 des in der Werkzeugmaschine verwendeten Werkzeugs vorherzusagen und damit zu unterstützten bei der Pflege und Wartung der Anlage sowie bei der Erhaltung der Qualität der mit dem Werkzeug bearbeiteten Werkstücke.

Folgende Voraussetzungen müssen erfüllt werden, um das vorgeschlagene Verfahren anwenden zu können:

- Für die Trainingsphase des KI-Modells werden Prozesssignale benötigt, auf Basis derer der Verschleiß ermittelt wird.

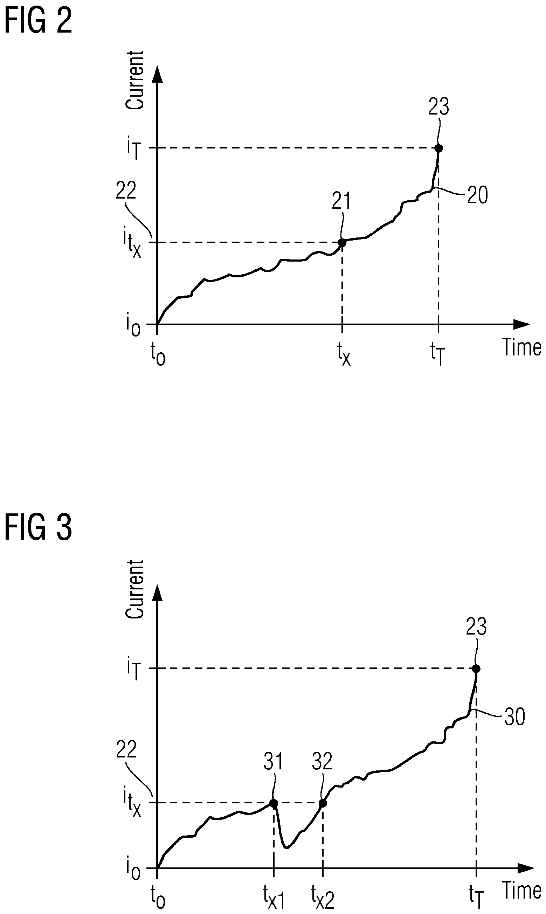

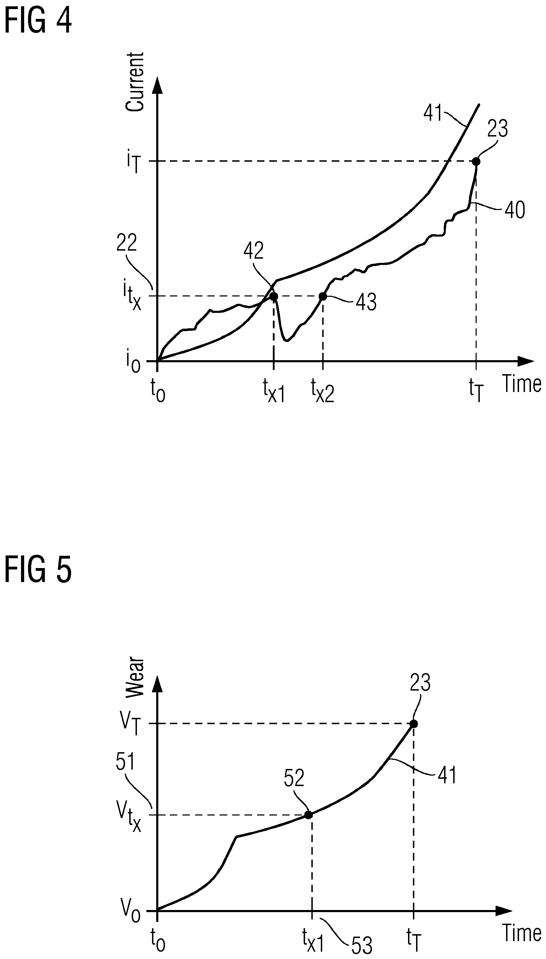

Wie in der Figur 2 dargestellt, wird in unserem Ausführungsbeispiel der momentbildende Strom, Current, verwendet, der immer über einem kompletten Lebenszyklus des BearbeitungsWerkzeugs aufgenommen wurde. Die Aufnahme startet beim Zeitpunkt $t_0$ und endet bei $t_T$ , wobei das Ende der Aufzeichnung nicht durch einen Bruch des Bearbeitungs-Werkzeugs definiert ist, sondern variieren kann. Dann muss der Initialverschleiß $v_0$ (beispielsweise: 0 %) und der Endverschleiß $v_T$ (beispielsweise 90 %) ermittelt werden. Dies kann erfolgen, indem ein neuer Bohrer, bevor dieser in die Spindel eingespannt wird, kurz gemessen wird. Der Verschleiß, der sich daraus ergibt, ist $v_0$. Nachdem der Bohrer verschlissen ist und ausgewechselt wird, wird dann abschließen $v_T$ gemessen. Dies wird später zu Figur 5 nochmal genauer erläutert.

Diese Lösung basiert auf einer zeitabhängigen Modellierung des Verschleißes zwischen zwei Verschleiß-Messpunkten, die jeweils am Anfang und am Ende des Lebenszyklus eines Bearbeitungs-Werkzeuges gemessen werden. Diese Zeitpunkte der Messung sind entscheidend, da der Zerspanungsprozess nicht beeinträchtigt werden soll. Diese Messpunkte können mit einem beliebigen Messsystem aufgenommen werden. Als Beispiel (siehe Figur 1 und die Beschreibung weiter oben) können Mikroskopie-Aufnahmen verwendet werden, die einen exakten Verschleißgrad v liefern. Dieser Verschleißgrad v kann entweder eine physikalische Größe sein (z.B. die Breite der Verschleißfläche) oder auch eine Prozentangabe, siehe oben.

Die Messung zu lediglich zwei Zeit-Punkten ist in der Fertigung realisierbar.

Neben den Prozesssignalen und der Information über den Verschleiß werden auch Parameter, wie zum Beispiel Eigenschaften des Werkzeugs (Material des Bearbeitungs-Werkzeugs, verwendetes Kühlmittel, Art des Antriebs, Stärke des Motors) und Werkstücks (Material, ...) benötigt. Diese müssen ebenfalls vom Anfang der Aufnahme bis zum Ende verfügbar sein.

Interpolation des Verschleißes - Labels

Da nur zwei Messpunkte ($v_0$ und $v_T$) des Verschleißes pro Lebenszyklus vorliegen, wird als nächstes der zeitabhängige Verschleiß modelliert. Im ersten Schritt muss das Signal, aus dem der Verschleiß extrahiert werden soll, vorverarbeitet werden. Ein Signal, das den Verschleiß abbildet, ist zum Beispiel der momentbildende Spindelstrom i, da dieser im Wesentlichen die Kraft widerspiegelt, die die Spindel leisten muss. Je höher der Verschleiß ist, desto mehr muss die Spindel leisten und desto höher ist der Strom. Da dies aber nur im Moment des Schneidens sichtbar wird, müssen diese Stücke des Signals detektiert werden. Dies kann zum Beispiel durch ein überwacht trainiertes Neuronales Netz (NN, z. B. ein RNN oder ein CNN) oder durch einen anderen, zum Beispiel regelbasierten Ansatz, erfolgen. Leerlaufstrom, Air-Cutting, Beschleunigen der Spindel usw. müssen entfernt werden, nur tatsächlicher Schneidestrom darf berücksichtigt werden, da nur dieser den Verschleiß widerspiegelt. Nach der Detektion der Schneidesignale müssen diese zu einem Signal konkateniert werden. Im Fall, wenn die Schnittparameter während eines Lebenszyklus nicht geändert werden, sieht die Amplitude des Schneidesignals schematisch beispielsweise aus wie in Figur 2. Auf der X-Achse ist der Zeitverlauf Time aufgetragen, auf der Y-Achse der gemessene Strom, Current, die Kurve 20 zeigt den aufgewendeten Strom, beispielsweise zum Zeitpunkt $t_x$, 21, ist er bei $i_{tx}$, 22.

Für den Fall, wenn etwa die Schnittgeschwindigkeit während des Zerspanens reduziert wird, kann der Verlauf des Stroms allerdings auch schwanken, siehe das Beispiel in Figur 3. Hier wird der gleiche Stromwert zum Zeitpunkt $t_{x1}$ und $t_{x2}$ erfasst, 31, 32, was zu einer Uneindeutigkeit führen würde. Das Gleiche gilt, wenn zwei unterschiedliche CNC-Teilprogramme mit unterschiedlichen Schneideparametern alternierend aufgerufen werden. Dieses Beispiel zeigt daher, dass in einer vorteilhaften Ausgestaltung der Strom nicht direkt genutzt werden sollte, um den Verschleiß abzulesen zu können, falls sich die Schnittparameter während der Überwachung ändern.

Die Lösung der zwei aufgelisteten Probleme (zum einen Änderung der Schneideparameter und zum anderen Vorhersage bei teilweise verschlissenen Werkzeugen) lassen sich durch Einführung der Stromintegral-Kennlinie (rot) beheben. Diese ist in einem Ausführungsbeispiel wie folgt definiert:

$$v_{t_x} = v_T \frac{\int_0^{t_X} i(\tau)d\tau}{\int_0^{T} i(\tau)d\tau}$$

In der Figur 4 ist das Beispiel mit der Kennlinie 30 aus Figur 3 aufgegriffen und durch eine Stromintegral-Kennlinie 40 ergänzt. So lässt sich der Verschleißgrad zu jedem beliebigen Zeitpunkt unabhängig von den Schnittparametern durch die Akkumulation des Stroms ermitteln. Die Stromlinie 30 weist noch eine uneindeutige Zuordnung für den Stromwert $i_{tx}$ auf mehrere Zeitpunkte $t_{x1}$, $t_{x2}$ auf, die neue Kennlinie 40 ist hier eindeutig und weist wiederum zu jedem Zeitpunkt einen anderen (höheren) Stromwert auf.

Um den Verschleiß prozessbegleitend ermitteln zu können, wird in einem nächsten Schritt das Training eines Neuronalen Netzes NN durchgeführt. Auf dem oben beschriebenen Weg werden die Labels, die zum Training des Neuronalen Netzes NN (zum Beispiel ein rekurrentes neuronales Netz RNN) benötigt werden, ermittelt. Diese Kennlinie wird nur während des NN-Trainings benötigt und nicht mehr während der produktiven Phase.

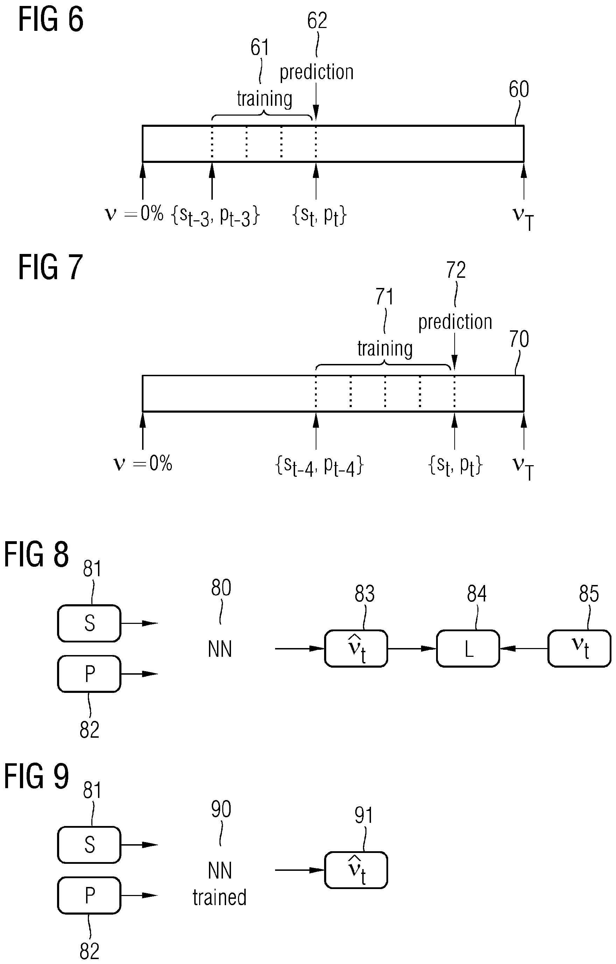

Das Training eines Neuronalen Netzes NN, 80 ist in der Figur 8 schematisch dargestellt. Als Input für das neuronale Netz NN dient die Wertemenge S, 81, welches die Signale zu einem bestimmten Zeitpunkt t und mit einem "Blick in die Vergangenheit" die j-vorherigen Signale vor dem Zeitpunkt t enthält. Der Zeitpunkt t muss größer oder gleich 0 sein und auch kleiner oder gleich T.

Die Anzahl der Sequenzen, die im Training verwendet wird, kann variieren. Das hat aber eine Auswirkung in der Inferenz. Wenn man im Training z.B. 4 Sequenzen verwendet, bestimmt dies die Zeit, die die KI braucht, um den Verschleiß bei gebrauchten Werkzeugen vorhersagen zu können. Es kann sein, dass bei den Bohrern zum Beispiel 4 Sequenzen mit Abtastrate von X benötigt werden, um die gewünschte Genauigkeit zu erreichen und dann vielleicht bei den Fräsköpfen zum Beispiel 6 Sequenzen mit Abtastrate X.

$$S = \{s_{t-j}, s_{t-j+1}, \ldots, s_{t-1}, s_t\}; \ 0 \leq j \leq t$$

Parameter P, 82 beinhaltet sämtliche Informationen wie die Schnittparameter und Eigenschaften des Werkzeugs und Werkstücks. Diese können eines oder auch mehrere Signale beinhalten.

$$P = \{p_{t-j}, p_{t-j+1}, \ldots, p_{t-1}, p_t\}$$

In Figur 7 und Figur 8 ist dargestellt, wie während des Trainings dem Neuronalen Netz verschiedene Tupel $\{s_j, p_j\}$, bestehend aus Signalen S und Parametern P als Input zum Training 61 gegeben werden, in diesem konkreten Beispiel sind es 3 Tupel. Dargestellt ist im Balken 60 die Entwicklung des Werkzeug-Verschleißes über die Zeit, hier von 0 % zum Zeitpunkt t=0 bis hin zu dem maximal möglichen (oder gemessenen Verschleiß) $v_t$ zum Zeitpunkt T, beispielsweise 90%. Die Parameter-Tupel sind aus diesem Zeitraum ausgewählt, die Breite der Fenster (also der Abstand der Messpunkte, ist eine Variable. Das Neuronale Netz 80 prädiziert den Verschleiß $\hat{v}_t$, 62, 83 zum Zeitpunkt t. Das Label $v_t$, 85 das durch die Stromintegral-Kennlinie bekannt ist, wird zusammen mit dem prädizierten Verschleiß $\hat{v}_t$ zur Optimierung des Netzes genutzt. Es wird daraus ein Loss L, 84 berechnet. Der Loss ist eine sogenannte Verlustfunktion, die aussagt wie viel "fehlt" noch bis das NN genug gelernt hat. Ziel des Trainings ist es, diese zu minimieren und idealerweise ist am Ende des Trainings L=0

Fig. 6 und 7 zeigen wie die Daten dem Netz "eingespeist" werden und Fig. 8 zeigt das Training und Fig. 9 die Inferenz.

Figur 8 zeigt einen vorgeschlagenen Trainingsmechanismus: das Augmentieren durch randomisiertes Generieren von Signalen S, 81 und Parametern P, 82 d. h. S und P haben unterschiedliche j und t.

Ein Beispiel für den Trainingsmechanismus vom NN könnte so aussehen: das ganze Signal (unterteilt in X Sequenzen) von t=0 bis t=T wird verwendet. Das Signal hat 100 Messpunkte und wird in 20 Sequenzen unterteilt. Jede Sequenz hat dann 5 Messpunkte. Zum Trainieren werden 4 Sequenzen verwendet. Das ergibt 20/4 = 5 Durchläufe.

Alternativ kann man die Daten augmentieren. Dies könnte dann so aussehen:

1. Durchlauf: Seq. 1,2,3,4
2. Durchlauf Seq. 2,3,4,5
3. Durchlauf Seq. 3,4,5,6
4. Durchlauf Seq. 4,5,6,7 usw.

Dies kann auch randomisiert erfolgen. Damit erhöht man die Anzahl der Durchläufe und gibt der KI mehr Content für das Training.

Die Anzahl der Sequenzen kann ebenfalls variieren. Wenn man diese 100 Messpunkte in 30 Sequenzen zu unterteilt, kann das durch Überlagerung der Sequenzen am Rand erfolgen. Wenn die erste Sequenz die Messpunkte 1, 2, 3 und 4 beinhaltet, fängt die 2. Sequenz bei Messpunkt3 an. Dadurch, dass die Länge der Sequenz und die Anzahl der Sequenz im Training randomisiert variiert werden kann, wird KI robuster durch die riesige Anzahl der Daten, die sich durch das Augmentieren ergeben.

Die benötigten Labels, die den Verschleißzustand beschreiben (zum Beispiel in %) werden mit der Stromintegral-Kennlinie berechnen. Dadurch prädiziert das Neuronale Netz 90 mit ein paar Tupeln $\{s_j, p_j\}$ bis $\{s_t, p_t\}$ den Verschleiß $\hat{v}_t$ 91 bei gebrauchten Werkzeugen.

**Produktiv Phase (Inferenz)**

Ein Problem bei der Modellierung des Verschleißes stellt der Startzeitpunkt der Aufnahme der Signale und Messpunkte dar, wenn dieser nicht beim Benutzen eines neuen BearbeitungsWerkzeugs anfängt. In einem konkreten Beispiel würde dies bedeuten, eine genaue Verschleißvorhersage in der produktiven Phase ist schwieriger, da die Vergangenheit des verwendeten Bohrers unbekannt ist.

Inferenz ist bereits bekannt und steht für den produktiven Einsatz eines neuronalen Netzes - es berechnet dabei das gewünschte Ergebnis, z. B. einen Score, eine Segmentierung oder eine Klassifizierung, oder im vorgegebenen Beispiel den Verschleiß. Die Inferenz schlußfolgert aufgrund der individuellen Anpassungen im vorangegangenen Training das Ergebnis eines neuen Objekts derselben Klasse. Ein erfolgreiches Training erlaubt der Inferenz, stets die richtigen Schlussfolgerungen über diese neuen Objekte zu ziehen.

Während der Inferenz wird das trainierte Model angewendet (siehe Figur 9). Im Fall eines neuen, unbenutzten Werkzeuges, kann der Verschleiß $\hat{v}_t$ von Anfang an richtig prädiziert werden, da das NN weiß, dass bei t=0 auch v=0 ist. Im Fall, dass es sich um ein Werkzeug handelt, das schon teilweise verschlissen würde, dauert es gewisse Zeit, bis das Netz die bestimmten Muster erkennt und somit eine richtige Vorhersage treffen kann.

Man kann zur Überwachung der Qualität ergänzend Aufnahmen aus der Qualitätssicherung der Produktion von durch das Werkzeug bearbeitete Bauteile verwenden. Mögliche Kriterien sind dabei, wie oben beschrieben, die Ausführung der Schnittkanten (präzise, klar oder ausgefranst) oder auch der ausgefrästen Flächen (glatt oder rau).

Durch Verwendung des so trainierten Neuronalen Netzes kann am Ende für das untersuchte Bearbeitungswerkzeug eine Vorhersage getroffen werden, zu welchem Zeitpunkt t ein Verschleißgrad des Werkzeugs erreicht ist, der das Wechseln erforderlich macht.

Das zuvor beschriebene Verfahren weist zahlreiche Vorteile gegenüber dem bekannten Stand der Technik auf:

Es ermöglicht eine Verschleißvorhersage, die nicht an eine Serienfertigung gebunden ist. Es werden beispielsweise keine "Fingerabdrücke" verwendet, wie im Stand der Technik beschrieben. Es werden auch keine festen Schwellwerte benötigt, um den Zustand des Werkzeugs zu ermitteln, sodass diese Lösung auch bei unterschiedlichen Werkstücken, die nacheinander bearbeitet werden, eingesetzt werden kann. Ebenso können während der Zerspanung Schnittparameter geändert werden und das Modell wird sich an diese anpassen können.

Es werden weiterhin keine zusätzlichen externen Sensoren benötigt. Die Verschleißvorhersage erfolgt ausschließlich anhand bereits verfügbarer Prozesssignale und Parameter, sodass dies diese Lösung insgesamt nachhaltiger ist als bekannte Lösungen.

Eine Recheneinheit, wie zum Beispiel ein Inter-Prozess Communication (IPC)/Edge Gerät, wird während der Produktivphase benötigt, um das Model anwenden zu können. Jedoch können auf einem Gerät auch mehrere Applikationen parallel ausgeführt werden.

Die beschriebene Lösung bietet auch Vorteile gegenüber der Trendüberwachung der Signale. Änderungen der Schnittparameter während der Überwachung werden durch die StromintegralKennlinie möglich. Auch die Verschleißvorhersage bei teilweise gebrauchten Werkzeugen wird durch das Augmentieren während des Trainings möglich.

**Patentansprüche**

1. Computerimplementiertes Verfahren zur Vorhersage des Verschleißes eines BearbeitungsWerkzeugs (11, 12) zur Bearbeitung eines Materials in einer industriellen Fertigung, mit den folgenden Schritten:

  - Ermitteln eines Verschleißgrads ($v_0$) des Bearbeitungswerkzeugs zu einem ersten Zeitpunkt ($t_0$)
  - Ermitteln des Verschleißgrads ($v_T$) des Bearbeitungswerkzeugs zu einem zweiten Zeitpunkt ($t_T$)
  - Modellieren eines zeitabhängigen Verschleißgrads durch Messen eines Verschleißabbildenden Signals (20, 30) und Abbildung in einer Kennlinie (30, 40) abhängig von der Zeit (t) und
  - Erzeugen einer Wertemenge (S) aus den verschleißabbildenden Signalen der modellierten Kennlinie (30, 40) und
  - Trainieren eines Neuronalen Netzes (NN) durch Eingabe der Wertemenge (S) und einer Parametermenge (P) betreffend die Eigenschaften des Bearbeitungs-Werkzeugs oder des zu bearbeitenden Materials,
  - Ermitteln eines Zeitpunktes des maximalen Verschleißes ($v_t$) durch das Neuronale Netz, zu dem eine Aufforderung zum Austausch des Bearbeitungs-Werkzeuges erfolgt.

2. Verfahren zur Vorhersage des Verschleißes eines Bearbeitungs-Werkzeugs (11, 12), gemäß Patentanspruch 1, **dadurch gekennzeichnet, dass** die Messung des Verschleißgrads mittels Mikroskopischer Aufnahmen des BearbeitungsWerkzeugs (11, 12) erfolgt.

3. Verfahren zur Vorhersage des Verschleißes eines Bearbeitungs-Werkzeugs (11, 12), gemäß Patentanspruch 1 oder 2, **dadurch gekennzeichnet, dass** der Verschleißgrad (v) in Prozent angegeben ist.

4. Verfahren zur Vorhersage des Verschleißes eines Bearbeitungs-Werkzeugs (11, 12), gemäß Patentanspruch 1 oder 2, **dadurch gekennzeichnet, dass** der Verschleißgrad (v) als physikalische Größe angegeben ist, insbesondere Form, Länge oder Fläche einer Verschleißfläche (111, 121) des Bearbeitungs-Werkzeugs.

5. Verfahren zur Vorhersage des Verschleißes eines Bearbeitungs-Werkzeugs (11, 12), gemäß einem der vorherigen Patentansprüche, **dadurch gekennzeichnet, dass** das Verschleißabbildende Signal der momentbildende Antriebsstrom (20, 30) des Bearbeitungs-Werkzeugs (11) ist.

6. Verfahren zur Vorhersage des Verschleißes eines Bearbeitungs-Werkzeugs (11, 12), gemäß einem der vorherigen Patentansprüche, **dadurch gekennzeichnet, dass** das Verschleißabbildende Signal nur der tatsächliche Schneidestrom verwendet.

7. Verfahren zur Vorhersage des Verschleißes eines Bearbeitungs-Werkzeugs (11, 12), gemäß einem der vorherigen Patentansprüche, **dadurch gekennzeichnet, dass** eine Bereinigung des Verschleißabbildenden Signals (30) durch eine Stromintegral-Kennlinie (40) erfolgt, insbesondere gemäß

$$v_{t_x} = v_T \, \frac{\int_0^{t_X} i(\tau)d\tau}{\int_0^T i(\tau)d\tau}$$

die das Verschleißabbildende Signal (30) kumuliert.

**8.** Verfahren zur Vorhersage des Verschleißes eines Bearbeitungs-Werkzeugs (11, 12), gemäß einem der vorherigen Patentansprüche, **dadurch gekennzeichnet, dass** eine Vorhersage bei einem bereits verwendeten Bearbeitungs-Werkzeug mit vorab vorhandenen Verschleißspuren durch Anwendung von Inferenz erfolgt.

**9.** Verfahren zur Vorhersage des Verschleißes eines Bearbeitungs-Werkzeugs (11, 12), gemäß einem der vorherigen Patentansprüche, **dadurch gekennzeichnet, dass** zur Überwachung Aufnahmen von einem durch das Bearbeitungs-Werkzeug bearbeiteten Werkstück verwendet werden, insbesondere die Ausführung von Schnittkanten oder von ausgefrästen Flächen.

**10.** Computerprogrammprodukt geeignet und eingerichtet zur Durchführung der Schritte gemäß eines der vorherigen Patentansprüche.

**11.** Vorrichtung zur Vorhersage des Verschleißes eines Bearbeitungs-Werkzeugs (11, 12) zur Bearbeitung eines Materials in einer industriellen Fertigung, geeignet und eingerichtet zum Training eines neuronalen Netzes (NN, 90), mit Daten einer Kennlinie (30, 40) abhängig von der Zeit (t) die sich ergibt aus

- dem Modell eines zeitabhängigen Verschleißgrads durch Messen eines Verschleißabbildenden Signals (20, 30), errechnet aus
- einem ersten Verschleißgrad ($v_0$) des Bearbeitungswerkzeugs zu einem ersten Zeitpunkt ($t_0$)
- einem zweiten Verschleißgrad ($v_T$) des Bearbeitungswerkzeugs zu einem zweiten Zeitpunkt ($t_T$)
- einer Wertemenge (S, 81) aus den verschleißabbildenden Signalen der modellierten Kennlinie (30, 40) und
- Trainieren des Neuronalen Netzes (NN, 90) mit den Daten der Wertemenge (S, 81) und weiteren Werten aus einerParametermenge (P, 82) betreffend die Eigenschaften des Bearbeitungs-Werkzeugs (11, 12) oder des zu bearbeitenden Materials,
und geeignet und eingerichtet zur Ausführung des dergestalt trainierten neuronalen Netzes (NN, 90) für die Ermittlung eines Zeitpunktes des maximalen Verschleißes ($v_t$) durch das Neuronale Netz (NN, 90),

und geeignet und eingerichtet zur Ausgabe eine Zeitpunkts der Aufforderung zum Austausch des Bearbeitungs-Werkzeuges (11, 12).

**12.** Vorrichtung zur Vorhersage des Verschleißes eines Bearbeitungs-Werkzeugs (11, 12), gemäß Patentanspruch 11, **dadurch gekennzeichnet, dass** der Verschleißgrad durch Mikroskopischer Aufnahmen des Bearbeitungs-Werkzeugs (11, 12) ermittelt wird.

**13.** Vorrichtung zur Vorhersage des Verschleißes eines Bearbeitungs-Werkzeugs (11, 12), gemäß Patentanspruch 11 oder 12, **dadurch gekennzeichnet, dass** der Verschleißgrad (v) in Prozent angegeben ist.

**14.** Vorrichtung zur Vorhersage des Verschleißes eines Bearbeitungs-Werkzeugs (11, 12), gemäß einem der Patentansprüche 11 bis 13, **dadurch gekennzeichnet, dass** der Verschleißgrad (v) als physikalische Größe angegeben ist, insbesondere Form, Länge oder Fläche einer Verschleißfläche (111, 121) des Bearbeitungs-Werkzeugs.

**15.** Vorrichtung zur Vorhersage des Verschleißes eines Bearbeitungs-Werkzeugs (11, 12), gemäß einem der Patentansprüche 11 bis 14, **dadurch gekennzeichnet, dass** das Verschleißabbildende Signal der momentbildende Antriebsstrom (20, 30) des Bearbeitungs-Werkzeugs (11) ist.

**16.** Vorrichtung zur Vorhersage des Verschleißes eines Bearbeitungs-Werkzeugs (11, 12), gemäß einem der Patentansprüche 11 bis 15, **dadurch gekennzeichnet, dass** das Verschleißabbildende Signal nur der tatsächliche Schneidestrom verwendet.

**17.** Vorrichtung zur Vorhersage des Verschleißes eines Bearbeitungs-Werkzeugs (11, 12), gemäß einem der Patentansprüche 11 bis 16, **dadurch gekennzeichnet, dass** eine Bereinigung des Verschleißabbildenden Signals (30) durch eine Stromintegral-Kennlinie (40) erfolgt, insbesondere gemäß

$$v_{t_x} = v_T \, \frac{\int_0^{t_X} i(\tau)d\tau}{\int_0^T i(\tau)d\tau}$$

die das Verschleißabbildende Signal (30) kumuliert.

**18.** Vorrichtung zur Vorhersage des Verschleißes eines Bearbeitungs-Werkzeugs (11, 12), gemäß einem der Patentansprüche 11 bis 17, **dadurch gekennzeichnet, dass**
eine Vorhersage bei einem bereits verwendeten Bearbeitungs-Werkzeug mit vorab vorhandenen Verschleißspuren durch Anwendung von Inferenz erfolgt.

19. Vorrichtung zur Vorhersage des Verschleißes eines Bearbeitungs-Werkzeugs (11, 12), gemäß einem der Patentansprüche 11 bis 18, **dadurch gekennzeichnet, dass**
zur Überwachung Aufnahmen von einem durch das Bearbeitungs-Werkzeug bearbeiteten Werkstück verwendet werden, insbesondere die Ausführung von Schnittkanten oder von ausgefrästen Flächen.

FIG 1

FIG 2

FIG 3

FIG 4

FIG 5

## FIG 6

training  61

prediction  62

60

$\nu = 0\%$  $\{s_{t-3}, p_{t-3}\}$  $\{s_t, p_t\}$  $\nu_T$

## FIG 7

training  71

prediction  72

70

$\nu = 0\%$  $\{s_{t-4}, p_{t-4}\}$  $\{s_t, p_t\}$  $\nu_T$

## FIG 8

81  S

82  P

80  NN

83  $\widehat{\nu}_t$

84  L

85  $\nu_t$

## FIG 9

81  S

82  P

90  NN trained

91  $\widehat{\nu}_t$

FIG 10

EP 4 589 394 A1

**EUROPÄISCHER RECHERCHENBERICHT**

Europäisches Patentamt
European Patent Office
Office européen des brevets

Nummer der Anmeldung

EP 24 15 3250

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 3 933 512 A1 (SIEMENS AG [DE]) 5. Januar 2022 (2022-01-05) | 1,3-8, 10,11, 13-18 | INV. G05B19/4065 |
| Y | * Absätze [0007] - [0022], [0037] - [0039] * | 2,9,12, 19 | |
| Y | US 2018/272491 A1 (YANG HAW-CHING [TW] ET AL) 27. September 2018 (2018-09-27) | 2,12 | |
| A | * Absätze [0033] - [0046]; Abbildung 3 * | 1,3-11, 13-19 | |
| Y | US 2018/246494 A1 (NAKAHAMA YASUHIRO [JP]) 30. August 2018 (2018-08-30) | 9,19 | |
| A | * Absätze [0002], [0001] - [0010], [0046] - [0048]; Abbildung 3 * | 1-8, 10-18 | |
| A | CN 111 660 141 A (UNIV BEIJING TECHNOLOGY) 15. September 2020 (2020-09-15) * Absätze [0001] - [0013] * | 1-19 | |

**RECHERCHIERTE SACHGEBIETE (IPC)**

G05B
B23Q

Der vorliegende Recherchenbericht wurde für alle Patentansprüche erstellt

| Recherchenort | Abschlußdatum der Recherche | Prüfer |
|---|---|---|
| München | 27. Mai 2024 | Frey, Richard |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**  EP 24 15 3250

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-05-2024

| Im Recherchenbericht angeführtes Patentdokument | Datum der Veröffentlichung | Mitglied(er) der Patentfamilie | Datum der Veröffentlichung |
|---|---|---|---|
| EP 3933512 A1 | 05-01-2022 | CN 115734839 A | 03-03-2023 |
| | | DE 102020208132 A1 | 30-12-2021 |
| | | EP 3933512 A1 | 05-01-2022 |
| | | EP 4127841 A1 | 08-02-2023 |
| | | US 2023251614 A1 | 10-08-2023 |
| | | WO 2022002643 A1 | 06-01-2022 |
| US 2018272491 A1 | 27-09-2018 | CN 108620949 A | 09-10-2018 |
| | | CN 108628286 A | 09-10-2018 |
| | | CN 108628661 A | 09-10-2018 |
| | | TW 201834784 A | 01-10-2018 |
| | | TW 201835722 A | 01-10-2018 |
| | | TW 201835841 A | 01-10-2018 |
| | | US 2018272491 A1 | 27-09-2018 |
| | | US 2018275630 A1 | 27-09-2018 |
| | | US 2018278494 A1 | 27-09-2018 |
| US 2018246494 A1 | 30-08-2018 | CN 108500736 A | 07-09-2018 |
| | | DE 102018103599 A1 | 30-08-2018 |
| | | JP 6487475 B2 | 20-03-2019 |
| | | JP 2018138327 A | 06-09-2018 |
| | | US 2018246494 A1 | 30-08-2018 |
| CN 111660141 A | 15-09-2020 | KEINE | |

EPO FORM P0461

Für nähere Einzelheiten zu diesem Anhang : siehe Amtsblatt des Europäischen Patentamts, Nr.12/82